# EUROPEAN PATENT APPLICATION

(11) **EP 2 866 182 A1**
(43) Date of publication of application: **29.04.2015**
(21) Application number: 13190274.4
(22) Date of filing: 25.10.2013
(51) Int. Cl.: G06Q 30/02, G06F 3/048

(54) **Providing contextual information**

(71) Applicant: Nokia Technologies OY, 02610 Espoo (FI)
(72) Inventor: Lehtiniemi, Arto, 33880 Lempäälä (FI); Laaksonen, Lasse, 37120 Nokia (FI); Vilermo, Miikka, 37200 Siuro (FI); Tammi, Mikko, 33310 Tampere (FI)
(74) Representative: Nokia Corporation

(57) **Abstract**

An apparatus, method, and computer program product for: associating an item in media content with a spatial location, receiving a user input corresponding to the spatial location and in response to receiving the user input, providing contextual information relating to the item, wherein the contextual information is dependent upon a previous occurrence of the item within the media content.

## Description

### TECHNICAL FIELD

The present application relates generally to providing contextual information.

### BACKGROUND

Electronic devices may be utilized for many different things. For example, writing and sending messages, listening to music, browsing internet pages, playing digital documents, reading audio and/or electronic books or navigation.

### SUMMARY

Various aspects of examples of the invention are set out in the claims.

According to a first aspect of the present invention, there is provided a method comprising associating an item in media content with a spatial location, receiving a user input corresponding to the spatial location and in response to receiving the user input, providing contextual information relating to the item, wherein the contextual information is dependent upon a previous occurrence of the item within the media content.

According to a second aspect of the present invention, there is provided an apparatus comprising a processor, memory including computer program code, the memory and the computer program code configured to, working with the processor, cause the apparatus to perform at least the following: associate an item in media content with a spatial location, receive a user input corresponding to the spatial location and provide, in response to receiving the user input, contextual information relating to the item, wherein the contextual information is dependent upon a previous occurrence of the item within the media content.

In at least one example embodiment, the memory and the computer program code are further configured to, with the processor, cause the apparatus to receive the user input during presentation of media representative of the item in the media content.

In at least one example embodiment, the memory and the computer program are further configured to receive an analysis of the media content.

In at least one example embodiment, the user input comprises a motion gesture referring to the spatial location.

In at least one example embodiment, the user input comprises tilting a device and the memory and the computer program are further configured to receive a degree of tilting.

In at least one example embodiment, the memory and the computer program are further configured to receive a further user input during providing the contextual information.

In at least one example embodiment, the memory and the computer program are further configured to determine, in response to receiving the user input corresponding to the spatial location, a starting point for the contextual information.

In at least one example embodiment, the memory and the computer program are further configured to receive a user input for associating an item in media content with a spatial location.

According to a third aspect of the present invention, there is provided a computer program product comprising a computer-readable medium bearing computer program code embodied therein for use with a computer, the computer program code comprising code for associating an item in media content with a spatial location, code for receiving a user input corresponding to the spatial location and code for providing, in response to receiving the user input, contextual information relating to the item, wherein the contextual information is dependent upon a previous occurrence of the item within the media content.

According to a fourth aspect of the present invention there is provided an apparatus, comprising means for associating an item in media content with a spatial location, means for receiving a user input corresponding to the spatial location and means for providing, in response to receiving the user input, contextual information relating to the item, wherein the contextual information is dependent upon a previous occurrence of the item within the media content.

### BRIEF DESCRIPTION OF THE DRAWINGS

For a more complete understanding of example embodiments of the present invention, reference is now made to the following descriptions taken in connection with the accompanying drawings in which:

FIGURE 1 shows a block diagram of an example apparatus in which examples of the disclosed embodiments may be applied;

FIGURE 2 shows a block diagram of another example apparatus in which examples of the disclosed embodiments may be applied;

FIGURE 3 illustrates providing contextual information in response to a user input in accordance with an example embodiment of the invention;

FIGURE 4 illustrates an example method incorporating aspects of example embodiments of the invention.

FIGURE 5 illustrates another example method incorporating aspects of example embodiments of the invention.

### DETAILED DESCRIPTON OF THE DRAWINGS

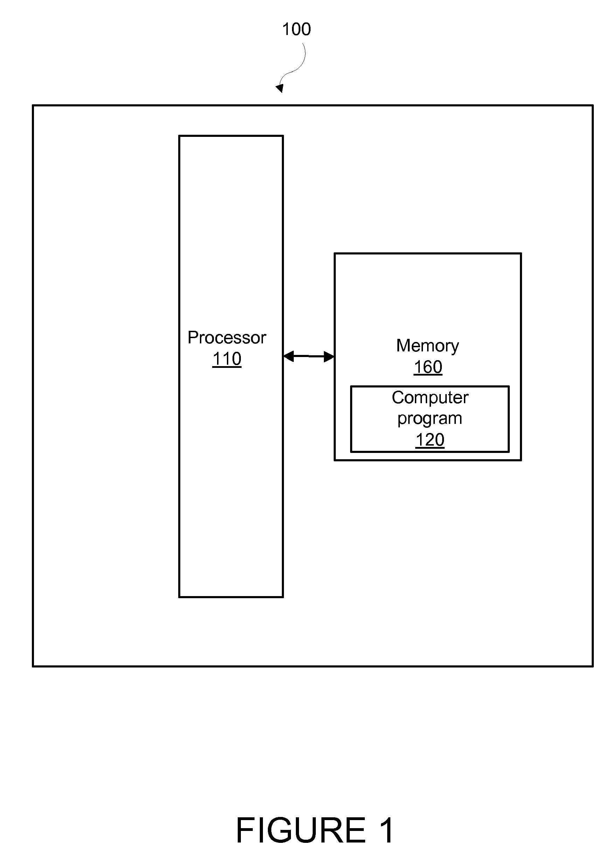

Example embodiments of the present invention and its potential advantages are understood by referring to FIGURES 1 through 5 of the drawings.

Example embodiments relate to providing contextual information relating to an item. According to an example embodiment, an item in media content is associated with a spatial location and a user input corresponding to the spatial location is received. Further, in response to receiving the user input, contextual information relating to the item is provided, wherein the contextual information is dependent upon a previous occurrence of the item within the media content.

According to an example embodiment, media content comprises a digital document and at least a portion of the contents of the digital document is presented, using spatial audio, for a user. The digital document may comprise textual, visual, audible and/ or tactile content.

Spatial audio may give a listener an impression of sound coming from a particular location, direction and/or distance. Spatial audio may comprise spatially positioning sound objects such as sound tracks in a three dimensional (3D) space by passing sound tracks through a sound-rendering system and reproducing the sound tracks through multiple transducers distributed around listening space. In this way, a spatial audio field may be provided to create an impression that sound is being generated from sound sources placed in multiple locations in the listening space.

Spatial audio may comprise directional audio. For example, with spatial audio an impression may be created that sound comes from behind the listener, above the listener, below the listener, from the right side or the left side of the listener, and/or from a certain distance from the listener. Spatial audio may also include 3D audio effects such as 3D simulation including a reverb effect, for example.

Spatial audio may be provided using different techniques such as loudspeaker stereophony, binaural technology or reconstruction using synthesis of the natural wave field. Spatial audio field may be created by a surround sound system surrounding a listener. A surround sound system may comprise multiple loudspeakers through which multiple discrete audio channels are routed. As another example, an illusion of a spatial audio field may be created by headphones.

According to an example embodiment a digital document comprises an audio book. In an example embodiment, an audio book comprises a recording of a text capable of being read out to a user by an audio book reader, a computer, a mobile computing device, a media player or any other suitable device or a system. An audio book may be stored on a memory device or a record medium or it may be downloaded, for example from a server. An audio book may be recorded in different formats such as using 3D audio. It should be noted that in an example embodiment an audio book may also comprise text, images or both.

According to an example embodiment a digital document comprises an electronic book. In an example embodiment, an electronic book comprises a publication in digital form comprising, for example, text, images or both. An electronic book may be read / viewed by a user using an electronic book reader, a computer, a mobile computing device, a media player or any other suitable device or a system.

According to an example embodiment, a digital document comprises radio theatre. In an example embodiment, radio theatre comprises a publication in digital form comprising, for example, dialogue, music and/or sound effects. Radio theatre may be listened to by a user using a radio, a computer, a mobile computing device, a media player or any other suitable device or a system.

According to an example embodiment, a publication in digital form may comprise, for example, a publication stored on a Compact Disc (CD), a Compact Disc Read-Only Memory (CD-ROM), a Digital Versatile Disk (DVD) or a Blu-ray disk. According to an example embodiment, a publication in digital form may comprise downloaded or streamed content such as a podcast, a webcast or the like.

One or more portions of a digital document may be pre-processed for an audible presentation. In some examples, a digital document may be processed dynamically, for example, while audibly presenting the digital document. In an example embodiment, text-to-speech synthesis is used for converting text associated with a digital document into speech that is played for the user. In an example embodiment, optical character recognition is used for converting a picture associated with a digital document to speech. In an example embodiment, metadata associated with a digital document may be extracted and converted into speech. In an example embodiment, voice recognition is used for identifying different voices, speakers and/or sound sources.

FIGURE 1 is a block diagram depicting an apparatus 100 operating in accordance with an example embodiment of the invention. The apparatus 100 may, for example, be an electronic device such as a chip or a chip-set. The apparatus 100 includes a processor 110 and a memory 160. In other examples, the apparatus 100 may comprise multiple processors.

In the example of Fig. 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus. The processor may further be operatively connected to external devices. For example, the processor 110 may further be configured to be operatively connected to an accessory such as a headset.

The memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a Compact Disc (CD), a Compact Disc Read-Only Memory (CD-ROM), a Digital Versatile Disk (DVD) or a Blu-ray disk.

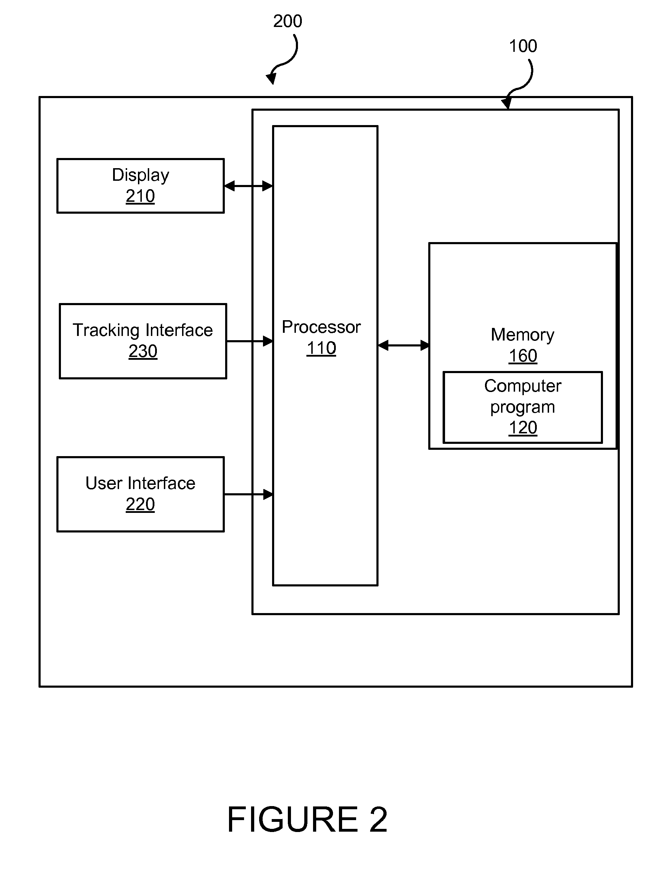

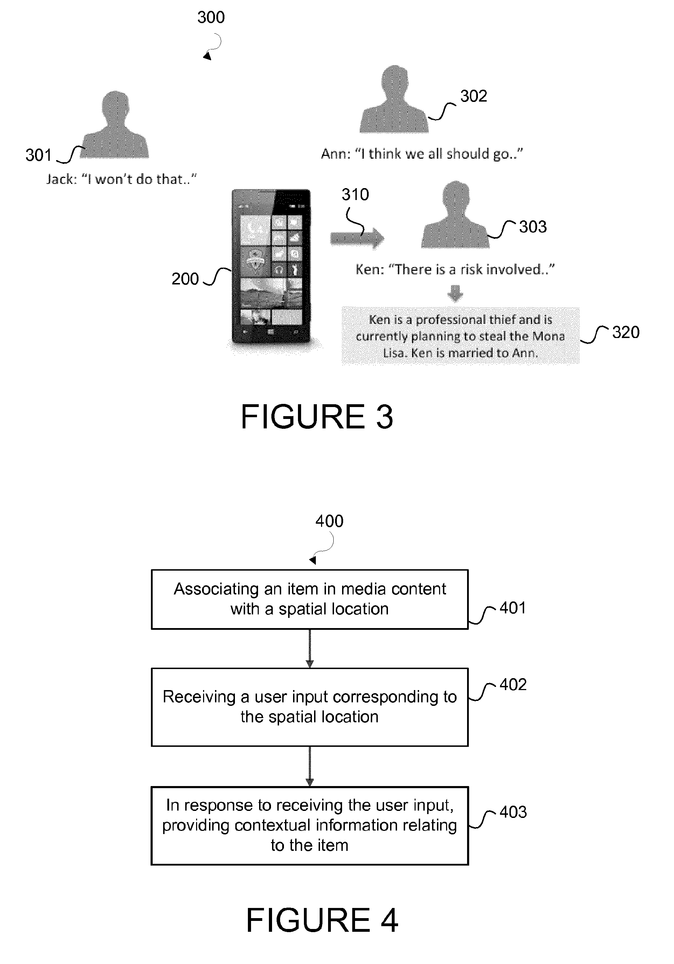

FIGURE 2 is a block diagram depicting an apparatus 200 in accordance with an example embodiment of the invention. The apparatus 200 may be an electronic device such as a hand-portable device, a mobile phone or a Personal Digital Assistant (PDA), a Personal Computer (PC), a laptop, a tablet computer, a wireless terminal, a communication terminal, a game console, a music player, an electronic book reader (e-book reader), an audio book device, a positioning device, a digital camera, a CD- DVD or Blu-ray player, or a media player. The apparatus 200 may also be, or be comprised in, a household appliance such as a refrigerator, a coffee maker, or any other suitable device such as a dashboard in a car. In the examples of FIGURES 2 and 3 it is assumed that the apparatus 200 is a mobile computing device.

In this example, the mobile computing device 200 is illustrated as comprising the apparatus 100, a display 210 and a user interface 220. However, the display 210 and/or user interface 220 may be external to the apparatus 200 but in communication with it. In some examples the display 210 may be incorporated into the user interface 220: for example, the user interface 220 may include a touch screen display.

In the example of Fig. 2 the user interface 220 is configured to enable inputting and accessing information in the mobile computing device 200. According to an example embodiment, the user interface 220 comprises a surface capable of receiving user inputs. The surface may be an input surface such as a touch screen or a touch pad. In some example embodiments, the mobile computing device 200 may include both a touch screen and a touch pad or multiple surfaces capable of receiving user inputs. A touch screen may be configured not to only enable accessing and/or inputting information but also to display user interface objects, while a touch pad may be configured to enable accessing and/or inputting information and a separate display may be provided. In some example embodiments, no display is provided. A user may input and access information by using a suitable input means such as a pointing means, one or more fingers, a stylus or a digital pen.

In an example embodiment, inputting and accessing information is performed by touching the surface such as the surface of a touch screen display 210 or a touch pad. Additionally or alternatively, proximity of an input means such as a finger or a stylus may be detected and inputting and accessing information may be performed by hovering the finger or the stylus over the surface. In a further example embodiment the surface may be a multi-touch surface configured to detect multiple at least partially concurrent touches on the surface.

A touch screen or a touch pad may be based on one or more of several different technologies. For example, different touch screen and pad technologies include resistive, capacitive, Surface Acoustic Wave (SAW), infrared, strain gauge, optical imaging, dispersive signal technology and acoustic pulse recognition touch screens. A touch screen or a touch pad may also operate using a combination of different technologies.

Additionally or alternatively, the user interface 220 may also comprise a manually operable control such as a button, a key, a touch pad, a joystick, a stylus, a pen, a roller, a rocker, a keypad, a keyboard or any suitable input mechanism for inputting and/or accessing information. Further examples include a microphone, a speech recognition system, eye movement recognition system, acceleration-, tilt-, movement- and/or pressure based input systems.

According to an example embodiment, the mobile computing device 200 comprises a tracking interface 230. The tracking interface 230 may comprise an operative connection with one or more tracking devices such as an accelerometer, a gyroscope and/or a camera for detecting motion or gesture input provided by a user. Additionally or alternatively, in some embodiments, the motion tracking device may comprise a wearable motion tracking device such as a headset or a ring with one or more orientation sensors. In some embodiments, there may be more than one tracking interfaces including, for example, a tracking interface for a headset, a tracking interface for an accelerometer and/ or gyroscope, and a tracking interface for a camera. A motion tracking device may be configured to detect a directional motion (e.g. pointing upwards, downwards, left or right), a free form motion, a speed of a motion, or any other suitable motion. The detected motion may comprise a motion gesture performed by the user. A motion gesture may comprise a sequence of movement performed by the user.

Referring back to the example of Fig.2, in addition to a display, the mobile computing device 200 may include another kind of an output device such as a tactile feedback system for presenting tactile and/or haptic information for a user. The tactile feedback system may be configured to receive control signals provided by the processor 110. The tactile feedback system may be configured to indicate a completed operation or to indicate selecting an operation, for example. In an example embodiment a tactile feedback system may cause the mobile computing device 200 to vibrate in a certain way to inform a user of an activated and/or completed operation.

In the example of Fig. 2, the apparatus 100 is configured to associate an item in media content with a spatial location. In an example embodiment, associating an item with a spatial location comprises associating sound representative of at least a portion of the item with the spatial location.

According to an example embodiment, an item in media content comprises an item identified based on an analysis of the media content. An item in media content may comprise, for example, a name or description associated with a person, an animal, a location, a geographical location, a phenomenon, a building, a work of art or the like.

According to an example embodiment, the apparatus 100 is configured to receive an analysis of media content such as a digital document. The apparatus 100 may receive the analysis from an external device (e.g. a server) or a service, or from a publisher, author, manufacturer or distributor of the media content. As a further example, an analysis may be received based on crowd sourcing. Crowd sourcing may comprise receiving contributions from a group of people, for example, from an online community. According to an example embodiment, the apparatus 100 is configured to perform an analysis of media content.

For example, in terms of a book or a movie, an analysis of media content may comprise names of characters appearing in the book / movie, dialogs, geographical locations, setting and/or the like. Further, an analysis may comprise a semantic analysis including an analysis of relations of the characters, connotations of phrases, explaining symbols or metaphors or the like.

An analysis may be based on tags included in the media content or it may be based, for example, on a list of items provided in the media content.

In an example embodiment, items identified based on the analysis are stored in a database operatively connected with the apparatus 100. The database may be located, for example, on the apparatus 100, the mobile computing device 200 or a server.

In addition to the item, further information relating to the item may also be stored in the database or associated with the item. The further information may comprise contextual information such as location information relating to the location of the item within the media content. Location information may comprise an absolute or a relative position of the item within the media content. For example, in terms of an electronic / audio book, the location information may comprise information relating to a section, a paragraph, a page, a column, a line or a spread of the audio / electronic book. As another example, the further information may comprise relationship information such as information relating to other items relevant for or associated with the identified item. As a further example, the further information may comprise semantic information such as information relating to how the item should be interpreted or construed by a user.

According to an example embodiment, associating an item in media content with a spatial location comprises mapping or assigning sound representative of the item to a location relative to a user. The location relative to a user may comprise a location in a spatial audio field. Mapping or assigning an item to a spatial location may comprise providing instructions for the apparatus 100 relating to how sound is to be routed to create an impression that sound representative of the item originates from the spatial location. Mapping an item to a spatial location may be performed automatically, without user input, by the apparatus 100 or it may be initiated and / or performed by a user.

In an example embodiment, the apparatus 100 is configured to receive a user input for associating an item in media content with a spatial location, and associate the item in media content with the spatial location. A user input for associating an item with a spatial location may comprise one or more user inputs or a combination of user inputs comprising an indication of a spatial location and an indication of an item in media content. A combination of user inputs may comprise a combination of inputs that are independent of each other, dependent on each other and/or occur concurrently.

An indication of a spatial location may comprise a gesture referring to the spatial location. The gesture may comprise a motion gesture, a touch gesture or a hover gesture referring to the spatial location. As an example, a motion gesture may comprise physical movement of the apparatus 100 such as shaking, moving, tilting and/or tapping a surface of the mobile computing device 200.

An indication of an item in media content may comprise, for example, a user input for selecting the item, pointing to the item or performing a hovering gesture over the item.

In an example embodiment, a user input for associating an item in media content with a spatial location comprises a first gesture referring to a spatial location and a second gesture indicating an item in media content. For example, the apparatus 100 may be configured to receive an indication that a character in an audio/electronic book is selected by a user and that the audio/electronic book is tilted to a particular direction by the user while the item is selected. Hence, the apparatus 100 is configured to associate the character with the particular direction.

According to an example embodiment, associating an item in media content with a spatial location comprises routing sound representative of the item to a location relative to a user. The apparatus 100 may be configured to cause routing the audio. According to an example embodiment, associating an item in media content with a spatial location comprises audibly presenting sound representative of the item such that an impression is created that sound is coming from a location in a spatial audio field.

The spatial audio field may be defined by virtual sound sources surrounding a user and it may be created, for example, using headphones such that sounds appear to originate from different locations, directions, and/or distances in space. A virtual sound source may comprise a physical sound source enabled to create an impression for a user that sound comes from a location, direction and/or distance different from the location of the physical sound source. As another example, the spatial audio field may be defined by physical sound sources surrounding a user and it may be created, for example, using loudspeakers.

A location in the spatial audio field may comprise an absolute location or a relative location such as a location relative to a user, a location relative to the apparatus 100 or mobile computing device 200 or any combination thereof.

Without limiting the scope of the claims, an advantage of associating an item in media content with a spatial location may be that items may be presented such that a user receives an impression that sounds come from different locations / directions. In this way, sounds representative of different items may be easier for the user to perceive. For example, if the user receives the impression that sounds come from different directions, the sounds may not be so easily mixed. Alternatively or additionally, it may be easier for the user to remember the items when they appear to be located in different spatial locations.

The apparatus 100 is further configured to receive a user input corresponding to the spatial location. A user input corresponding to a spatial location may comprise an input comprising a characteristic indicating the spatial location. For example, a user input may comprise an input towards the spatial location, an input at least partially enclosing the spatial location, coinciding with the spatial location, pointing to the spatial location and/or relating to the spatial location.

In an example embodiment, the user input comprises a motion gesture referring to the spatial location. A motion gesture referring to a spatial location may comprise motion indicating, coinciding with or pointing to the spatial location. A motion gesture may be performed by the user by moving mobile computing device 200 or moving an input mechanism (e.g. a finger, hand or head) relative to the mobile computing device 200. Moving an input mechanism relative to the mobile computing device may or may not comprise touching the mobile computing device 200.

According to an example embodiment, the user input comprises a motion gesture. A motion gesture may comprise physical movement of the apparatus 100 such as shaking, moving, tilting and/or tapping a surface of the mobile computing device 200. For example, the user input may comprise tilting the apparatus 100, mobile computing device 200 or a separate device, operatively connected to the apparatus 100, towards the spatial location, pointing with a finger towards the spatial location, nodding with the head towards the spatial location or performing a touch or hover gesture towards the spatial location. A motion gesture may be detected, for example, by a motion detection apparatus such as an accelerometer or a gyroscope, or by a proximity or an image based apparatus such as a hover sensor or a camera, or a combination thereof.

Without limiting the scope of the claims, an advantage of a user input corresponding to a spatial location may be that it is intuitive for the user. For example, if a user receives an impression that a sound comes from the left, pointing to the left towards the sound may be very intuitive for the user. In this way, the user does not need to point, for example, a user interface element on a display, but the user can directly point towards a sound source.

The apparatus 100 is configured to provide, in response to receiving the user input, contextual information relating to the item, wherein the contextual information is dependent upon a previous occurrence of the item within the media content.

In should be noted that a previous occurrence of an item may comprise a chronologically previous occurrence, but is not limited to that. In terms of an audio / electronic book example, a previous occurrence may comprise occurrence of an item such as actions and/or phrases of a character in past, in the future, or at a particular moment. Additionally or alternatively, a previous occurrence may comprise an occurrence of the item in a different media content such as a different digital document.

In some cases, a user input may be interpreted as ambiguous, if multiple items are associated with a spatial location or items are associated with spatial locations close to each other. Spatial locations close to each other may comprise locations within a pre-determined distance from each other such that a user input may be interpreted as corresponding to more than one spatial location.

According to an example embodiment, the apparatus 100 is configured to determine an order of relevance for items corresponding to an ambiguous user input. The apparatus 100 may be configured to sort items in an ascending or descending order of relevance. A relevance of an item may relate to the relevance of the item in the context of the media content, relevance of the item for a user or the like. In an example embodiment, the apparatus 100 is configured to provide contextual information relating to more than one item in media content. For example, the apparatus 100 may be configured to provide contextual information relating to items corresponding to an ambiguous input in an order of relevance.

In an example embodiment, the apparatus 100 is configured to provide contextual information relating to an item that is not the most relevant in the context of the media content. For example, a user may wish to receive contextual information relating to a character that is not in a major role in an audio/electronic book.

In an example embodiment, the apparatus 100 is configured to provide contextual information relating to an item that is considered as the most relevant for a user. A most relevant item for a user may be, for example, an item that the user is not likely to remember or an item that the user has bookmarked, or the like.

In an example embodiment, the apparatus 100 is configured to receive a user input for controlling in which order contextual information is provided. For example, if contextual information is provided for a user in a descending order, a user may with a motion gesture indicate that an ascending order is desired.

According to an example embodiment, the apparatus 100 is configured to provide, in response to receiving an ambiguous user input, assisting output for a user. As discussed above, receiving an ambiguous user input may comprise receiving an input corresponding to multiple spatial locations close to each other and/or multiple items associated with a spatial location.

According to an example embodiment, assisting output comprises providing an indication of an ambiguous user input. An indication of an ambiguous user input may comprise presenting items corresponding to the ambiguous user input. For example, the apparatus 100 may be configured to provide visual, audible and/or haptic/tactile feedback representative of items corresponding to the ambiguous feedback.

According to an example embodiment, assisting output comprises re-associating at least one item in media content with a second spatial location. For example, if multiple items are associated with a first spatial location, assisting output may comprise re-associating at least one item with a second spatial location such that the re-associated item may unambiguously be referred to. Similarly, if multiple items are associated with spatial locations close to a first spatial location, assisting output may comprise re-associating at least one item with a second spatial location such that the re-associated item may unambiguously be referred to. The user may then select a re-associated item by an input corresponding to the second spatial location.

According to an example embodiment, the apparatus 100 is configured provide an indication that one or more items are re-associated. The indication may comprise, for example, audible, visual and/or haptic/tactile feedback. In an example embodiment, the indication comprises highlighting at least one re-associated item. Highlighting may comprise for example, visual, audible or any suitable highlighting. For example, visual highlighting may comprise visually indicating that an item is re-associated. Audibly highlighting re-associated items may comprise utilizing sound effects such as creating an impression that media representative of a re-associated item is closer / farther away from the user than items that are not re-associated or that do not correspond to the ambiguous user input.

According to an example embodiment, the apparatus 100 is configured to determine, in response to receiving the user input, a starting point for the contextual information. Based on the starting point, one or more relevant items may be selected in a database for providing the contextual information. As another example, based on the starting point, one or more items in a database may be precluded from contextual information.

According to an example embodiment, the contextual information comprises visual information. The visual information may be provided, for example, on a display of the mobile computing device 200 provided by the apparatus 100, on a display of a separate device operatively connected to the apparatus 100, by a projector operatively connected to the apparatus 100 or the like. It should be noted that the contextual information may alternatively or additionally comprise audible information and/or haptic feedback.

In an example embodiment the contextual information comprises a summary or a recap relating to the item in media content. Therefore, in the example of the item being a character in an electronic book or an audio book, for example, the summary may comprise previous actions of the character and the recap may comprise previous phrases of the character.

Continuing with the example of the item being a character in an electronic or audio book, a previous occurrence of the item may comprise, for example, occurrence of the item in a previous chapter, paragraph, sentence, section, a previous digital document in a sequence of digital documents or the like. In an example embodiment, the previous occurrence may comprise a particular portion of a book such as a summary, introduction, back cover text, index or table of contents of the book.

Without limiting the scope of the claims, an advantage of providing contextual information, wherein the contextual information is dependent upon a previous occurrence of the item may be that a user may remind oneself of previous actions, situations and/or phrases relating to the item.

According to an example embodiment, the apparatus 100 is configured to receive the user input during presentation of media representative of the item in the media content. Media representative of an item may comprise sound, visual presentation and/or tactile/haptic presentation. For example, if the device is an audio book reader and the user tilts the audio book reader during presentation of audio representative of the item, contextual information relating to the item may be provided. In an example embodiment, the apparatus 100 is configured to pause or stop the audio being presented in response to receiving the user input.

Without limiting the scope of the claims, an advantage of receiving the user input during presentation of the media content may be that more accurate contextual information relating to the presented audio or the item represented by the audio may be provided for the user.

According to an example embodiment, the apparatus 100 is configured to receive the user input when the media content is not being presented. The apparatus 100 may be configured to cause presenting an indication that contextual information is available and may be presented in response to a user input corresponding to a spatial location. For example, it may be indicated to the user that different items are associated with different spatial locations and by inputting a user input corresponding to a spatial location contextual information is presented to the user.

Without limiting the scope of the claims, an advantage of receiving the user input when the media content is not presented may be that contextual information relating to the media content may be presented without presenting the media content. For example, assuming a user is buying an audio book and wishes to know something about the characters appearing in the audio book, the user may, for example, tilt the audio book to different directions to receive information on the characters or the like.

According to an example embodiment, the apparatus 100 is configured to provide the contextual information in dependence upon a characteristic of the user input. A characteristic of a user input may comprise an amount, a number of actions, a duration, a degree, intensity or any other suitable characteristic relating to the user input. In an example embodiment, the user input comprises tilting a device and the apparatus 100 is configured to receive a degree of tilting. In this example, the apparatus 100 is further configured to provide the contextual information in dependence upon the degree of tilting.

According to an example embodiment, a characteristic of the contextual information is dependent upon a characteristic of the user input. A characteristic of the contextual information may comprise, for example, an amount, level of detail and/or a time span of contextual information.

In an example embodiment, the amount of contextual information depends upon the degree of tilting. For example, if a user tilts the device, by 5 degrees, a smaller amount of contextual information may be provided compared to a situation where a user tilts the device by 40 degrees.

In an example embodiment, the level of detail of contextual information depends upon the degree of tilting. For example, if a user tilts the device, for example, 10 degrees, the level of detail may be smaller compared to a situation where a user tilts the device by 20 or 30 degrees.

In an example embodiment, the time span of contextual information depends upon the degree of tilting. For example, if a user tilts the device, for example, 15 degrees, the time span may shorter than compared to a situation where a user tilts the device by 35 or 40 degrees.

In an example embodiment, a degree of tilting is determined based on an angle of orientation of the device compared to a reference value. The reference value may be defined by the user, the manufacturer of the apparatus 100 / device or it may be set and/or adjusted based on user behavior. The reference value may be an absolute value, a relative value or a direction, for example.

Without limiting the scope of the claims, an advantage of receiving a degree of tilting may be that a user is able to control provision of the contextual information. Another advantage may be that a user may control the amount of provided contextual information.

According to an example embodiment, the item in media content comprises at least one of the following: a character, a name associated with a person, description associated with a person, an animal, a location, a geographical location, a phenomenon, a building and a work of art in an audio or an electronic book. In an example embodiment, the item in media content corresponds to a character in an audio book or an electronic book. For example, the character may comprise a person represented in a story.

According to an example embodiment, the apparatus 100 is further configured to receive a further user input during providing the contextual information. A further user input may cause the apparatus 100 to provide a modified or additional contextual information. The modified or additional contextual information may comprise information of the same or different type than the contextual information. The further user input may or may not correspond to a spatial location. For example, if the contextual information comprises audibly presented information comprising locations such as towns or villages, a further user input towards or pointing to a town may cause presenting the town on a map.

FIGURE 3 illustrates an example of providing contextual information in response to a user input in accordance with an example embodiment of the invention. In this example it is assumed that the method is implemented in a mobile computing device 200 comprising an apparatus 100.

In the example of FIGURE 3, a user is listening to an audio book. The audio book is audibly presented utilizing spatial audio to the user. In the audio book, there appear three characters: Jack 301, Ann 302 and Ken 303. In the example of FIGURE 3 it is assumed that the user faces the mobile computing device 200 such that the user hears Jack's voice ahead and to the left of the user's position, Ann's voice ahead and to the right of the user's position, and Ken's voice on the right.

In this example, the apparatus 100 is configured to determine, in response to receiving a user input (such as tilting a device), a starting point for the contextual information. In this example a starting point comprises a border between previous and upcoming content. For example, when the user tilts the mobile computing device 200 towards the spatial location associated with Ken (in this example to the right of the user as indicated by arrow 310), contextual information is provided relating to Ken. In this example, the contextual information comprises a summary of Ken's character as indicated by 320. In an example embodiment, the contextual information may comprise a limited recap of a character's previous phrases, a summary of the character's previous actions or a combination thereof.

According to an example embodiment, the amount of contextual information is dependent upon a degree of tilting. For example, in the example of FIGURE 3, the more the user tilts the device, the more information about Ken is provided. As another example, the level of detail of contextual information is dependent on a degree of tilting. For example, the more the user tilts the device, the more detailed information about Ken is provided. As a further example, the time span of contextual information is dependent upon a degree of tilting. For example, the more the user tilts the device, the further in the history the information relating to the item extends.

FIGURE 4 illustrates an example method 400 incorporating aspects of the previously disclosed embodiments. More specifically the example method 400 illustrates providing contextual information relating to an item in media content. In this example, it is assumed that the method is implemented in the mobile computing device 200 comprising the apparatus 100.

The method starts with associating 401 an item in media content with a spatial location. As discussed above, associating an item in media content with a spatial location may comprise mapping, assigning, routing and/or presenting sound representative of the item to a location in a spatial audio field. At block 402, the method continues with receiving a user input corresponding to the spatial location. In an example embodiment, a user input corresponding to a spatial location comprises an input comprising a characteristic indicating the spatial location. The method continues at block 403, with in response to receiving the user input, providing contextual information relating to the item, wherein the contextual information is dependent upon a previous occurrence of the item within the media content. Further, the contextual information may be provided in dependence on a characteristic of the user input such as an amount, a number of actions, duration, a degree, intensity or any other suitable characteristic relating to the user input.

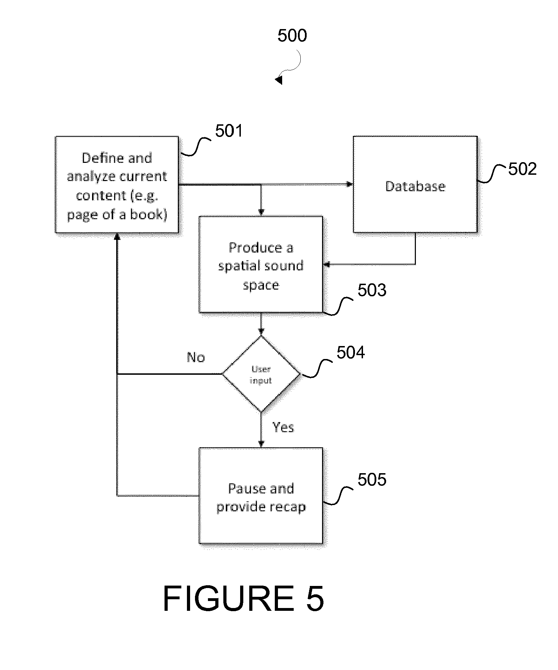

FIGURE 5 illustrates another example method 500 incorporating aspects of example embodiments of the invention. More specifically the example method 500 illustrates associating an item in media content with a spatial location. In this example, it is assumed that the method is implemented in the mobile computing device 200 comprising the apparatus 100. It is further assumed that the media content comprises an audio book comprising audio output in terms of a recording of a text being played to a user.

The method starts with defining and analyzing 501 current content. In an example embodiment, defining current content comprises defining a book type by the apparatus 100. Defining a book type may comprise, for example, receiving the book type from a user or from a device operatively connected with the apparatus 100 such as a server, or determining the book type by the apparatus 100. According to an example embodiment, the apparatus 100 is configured to define a book type. It should be noted that in an example embodiment, it is not be necessary to define a book type or defining a book type is optional. In this example, the book type is defined as being an audio book.

As discussed earlier, analyzing current content may comprise, for example, storing names of characters appearing in the book, dialogs, geographical locations, setting and/or the like. Further, analyzing content may comprise semantically analyzing relations of characters, connotations of phrases, explaining symbols or metaphors or the like.

In an example embodiment, the apparatus 100 is configured to analyze content. In another example embodiment, the apparatus 100 is configured to receive an analysis of content. For example, the analysis may be received from the publisher, distributor or the author of the book, or it may be crowd sourced.

According to an example embodiment, the analyzed content is stored 502 in a database operatively connected to the apparatus 100. The database may be located, for example, on server or a mobile computing device 200.

Similarly to block 401 in the example of FIGURE 4, the method further continues with producing 503 a spatial sound space. Producing a spatial sound space comprises associating an item in media content with a spatial location as discussed above. In this example, producing a spatial sound space comprises routing the audio output through multiple loudspeakers.

In response to receiving 504 a user input corresponding to the spatial location (similarly to block 402 in FIGURE 4), contextual information relating to the item may be provided, wherein the contextual information is dependent upon a previous occurrence of the item within the media content (similarly to block 403 in FIGURE 4). In this example, the user input may comprises tilting the mobile computing device 200 during an output of audio representative of the item in media content.

Further, in this example, providing contextual information comprises pausing the audio output and providing 505 a recap relating to the item in media content.

Without in any way limiting the scope, interpretation, or application of the claims appearing below, a technical effect of one or more of the example embodiments disclosed herein is that contextual information may be provided dynamically. Another technical effect is that a user may intuitively determine the item to which the contextual information relates and also define an amount, a level of detail and/or a time span for the contextual information.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. A method comprising:
associating an item in media content with a spatial location;
receiving a user input corresponding to the spatial location; and
in response to receiving the user input, providing contextual information relating to the item, wherein the contextual information is dependent upon a previous occurrence of the item within the media content.

2. A method according to claim 1, wherein the user input is received during presentation of media representative of the item in the media content.

3. A method according to claim 1 or 2, further comprising receiving an analysis of the media content.

4. A method according to any preceding claim, wherein the user input comprises a motion gesture referring to the spatial location.

5. A method according to claim 4, wherein the user input comprises tilting a device.

6. A method according to claim 5, further comprising receiving a degree of tilting.

7. A method according to any preceding claim, wherein the item comprises at least one of the following: a character, a name associated with a person, description associated with a person, an animal, a location, a geographical location, a phenomenon, a building and a work of art in an audio book or an electronic book.

8. A method according to any preceding claim, further comprising receiving a further user input during providing the contextual information.

9. A method according to any preceding claim, wherein the spatial location comprises a location relative to a user.

10. A method according to any preceding claim, comprising determining, in response to receiving the user input corresponding to the spatial location, a starting point for the contextual information.

11. A method according to any preceding claim, further comprising receiving a user input for associating an item in media content with a spatial location.

12. A method according to any preceding claim, wherein contextual information comprises at least one of the following: one or more previous actions, situations and phrases relating to the item.

13. An apparatus, comprising:
means for associating an item in media content with a spatial location;
means for receiving a user input corresponding to the spatial location; and
means for providing, in response to receiving the user input, contextual information relating to the item, wherein the contextual information is dependent upon a previous occurrence of the item within the media content.

14. An apparatus according to claim 13, the apparatus further comprises means for performing a method according to any of claims 2 to 12.

15. A computer program product comprising a computer-readable medium bearing computer program code embodied therein for use with a computer, the computer program code comprising
code for performing a method according to any of claims 1 to 12.
